# EUROPÄISCHE PATENTSCHRIFT

(11) **EP 1 600 704 B1**
(45) Veröffentlichungstag und Bekanntmachung des Hinweises auf die Patenterteilung: **26.05.2010**
(21) Anmeldenummer: 05450079.8
(22) Anmeldetag: 28.04.2005
(51) Int. Cl.: F24F 6/14, F24F 5/00

(54) **Vorrichtung zum Beaufschlagen der Umgebungsluft**
Device for spraying a liquid in the atmosphere
Dispositif pour pulvériser un liquid dans l'air ambiant

(30) Priorität: 30.04.2004 AT 7522004
(43) Veröffentlichungstag der Anmeldung: 30.11.2005
(73) Patentinhaber: Merlin Technology GmbH, 4910 Ried im Innkreis (AT)
(72) Erfinder: Reisinger, Johann, 4925 Pramet (AT)
(74) Vertreter: Hübscher, Helmut

(56) Entgegenhaltungen:
- FR-A- 2 669 407
- FR-A- 2 775 624
- US-A- 5 979 793

## Beschreibung

Die Erfindung betrifft eine Vorrichtung zum Beaufschlagen einer Luft mit einer die Sprühflüssigkeit aufnehmenden Druckleitung, die mit einer Sprüheinrichtung verbunden ist, und mit einem auf einem Fußteil lastenden rohrförmigen Gehäusemantel.

Aus dem Stand der Technik ist es bekannt (siehe FR-A-2 669 407), die beim Befeuchten einer Luft entstehende Verdampfungskälte auch zum Kühlen der Luft einzusetzen. Um eine für solch eine Befeuchtung vorgesehene Sprüheinrichtung über einen zu kühlenden Bereich zu halten, sind derartige Vorrichtungen meist säulenartig ausgebildet. Im allgemeinen bestehen solche Vorrichtungen aus einem Fußteil, einem Standrohr, einer darauf aufgesetzten Sprüheinrichtung und einer im Standrohr verlaufenden flexiblen Druckleitung, die mit der Sprüheinrichtung verbunden ist und die eine zu versprühende Sprühflüssigkeit führt. Es hat sich jedoch herausgestellt, daß derartige Vorrichtungen vergleichsweise aufwendig und schwierig zu montieren sind. So muß neben einem Durchführen der Druckleitung durch das Standrohr sichergestellt werden, daß vor einem Aufsetzen der Sprüheinrichtung auf das Standrohr die Druckleitung flüssigkeitsdicht angeschlossen ist. Eine unzureichende Druckverbindung ist nur mit einem Demontieren der Vorrichtung zu beheben, was vergleichsweise zeitaufwendig ist. Außerdem sind derartige Vorrichtungen beim Transport vergleichsweise sperrig, da insbesondere das Standrohr einen hohen Volumsanteil der Transportverpackung beansprucht. Besonders nachteilig ist jedoch, daß das Standrohr nur bedingt anpassungsfähig an unterschiedliche Werbeträger ist, da die vorteilhaft große Werbefläche des Standrohrs meist nur mit einem Auswechseln des Standrohrs verändert werden kann.

Die Erfindung hat sich daher ausgehend vom eingangs geschilderten Stand der Technik die Aufgabe gestellt, eine Vorrichtung zum Beaufschlagen der Umgebungsluft zu schaffen, die sich nicht nur durch ihre konstruktiv einfache Ausgestaltung auszeichnet, sondern auch vergleichsweise einfach montierbar ist. Außerdem soll die Vorrichtung anpassungsfähig an unterschiedliche Werbeträger sein, sowie sollen die an die Druckleitungen anschließenden Druckverbindungen einfach überprüft werden können.

Die Erfindung löst die gestellte Aufgabe dadurch, daß das Fußteil und wenigstens zwei starre Druckleitungen ein Standgerüst ausbilden, mit dem der aus zumindest zwei Mantelteilen bestehende Gehäusemantel auswechselbar verbunden ist.

Bilden das Fußteil und wenigstens zwei starre Druckleitungen ein Standgerüst aus, so ist es auf einfache Weise möglich, ein tragendes Gerüst zu schaffen, auf dem eine Sprüheinrichtung aufgesetzt werden kann. Es ist somit auf ein Standrohr als Träger für solch eine Sprüheinrichtung zu verzichten, was besonders beim Transport von Vorteil ist, da so der beanspruchte Volumensanteil der Transportverpackung gering gehalten werden kann. Außerdem ergibt sich aufgrund der starren Druckleitungen als Teil des Standgerüsts stets eine einfache Anschlußmöglichkeit an die Druckleitungen, sei es für eine Pumpeneinheit zum Zuführen der Sprühflüssigkeit oder für die Sprüheinrichtung am oberen Ende des Standgerüsts, da ja die Druckleitungen vom Fußteil ausgehend bis an eine eventuell oben aufgesetzte Sprüheinrichtung ragen. Insbesondere aber sind die Druckanschlüsse von außen einsehbar und zugänglich, so daß selbst fehlerhafte Druckverbindungen einfach und schnell behoben werden können. Außerdem ist es aufgrund einer bereits tragenden Struktur des Standgerüsts erfindungsgemäß möglich, den Mantel aus zumindest zwei Mantelteilen aufzubauen und diese Mantelteile mit dem Standgerüst auswechselbar zu verbinden. Die Vorrichtung kann daher im Gegensatz zum Stand der Technik vergleichsweise einfach an andere Werbeträger angepaßt werden, da selbst bei aufgestellter Vorrichtung die Mantelteile für unterschiedliche Werbeträger ausgetauscht werden können, ohne dabei tragende Elemente der Vorrichtung demontieren zu müssen.

Werden die starren Druckleitungen je von einer Profilleiste ausgebildet, so ist es vergleichsweise einfach möglich, Befestigungspunkte für die Mantelteile am Standgerüst vorzusehen. Bilden beispielsweise die Profilleisten gegenüberliegende, V-förmig zulaufende Nuten aus, so kann in diese Nuten je ein Mantelteil eingeschoben werden, was auch ein einfaches Austauschen der Mantelteile ermöglicht.

Mit einem Vorsehen einer L-förmigen Schelle an den Enden der gleichlangen Profilleisten, kann ein verdrehfestes Halten der Profilleisten gewährleistet werden, wobei die Profilleisten mit einer Seitenwand der Schelle verschraubt sind sowie die Schelle Öffnungen zum Durchführen der Druckleitungen und Halteelemente zum Hintergreifen von Hohlräumen der Profilleisten aufweist. Damit kann ein einfacher Zusammenbau der Vorrichtung sichergestellt werden, da lediglich mit einer geringen Anzahl an Verschraubungen ein Standgerüst erstellt werden kann.

Führt eine Druckleitung ein Heizmedium und ist diese Druckleitung mit einer am oberen Ende des Standgerüsts angeordneten Heizeinrichtung verbunden, so kann die Vorrichtung auch zum Heizen der Luft verwendet werden.

Sind entlang der Druckleitung Sprüheinrichtungen zum Versprühen von Sprühflüssigkeit angeordnet, so kann entlang der Druckleitung die Umgebungsluft befeuchtet bzw. gekühlt werden.

In den Zeichnungen ist der Erfindungsgegenstand beispielsweise dargestellt. Es zeigt
- Fig. 1: eine Seitenansicht des Erfindungsgegenstandes ohne den Mantel,
- Fig. 2: eine vergrößerte Teilansicht der Fig. 1 mit eingesetztem Mantel, wobei der Mantel teilweise aufgerissenen ist,
- Fig. 3: eine Draufsicht nach Schnitt III-III der Fig. 1 mit weggelassenem Fußteil und
- Fig. 4: eine vergrößerte Ansicht auf die Druckleitung aus Fig. 3.

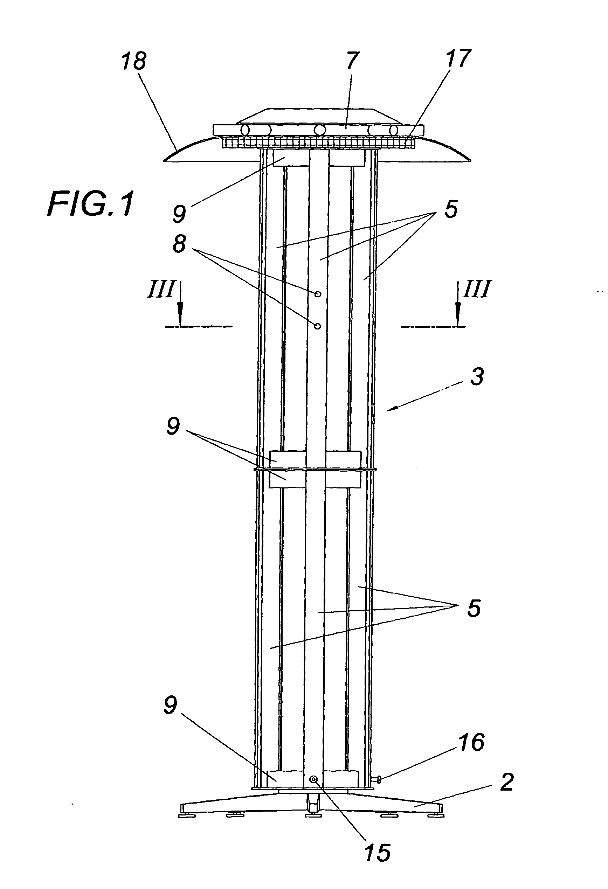

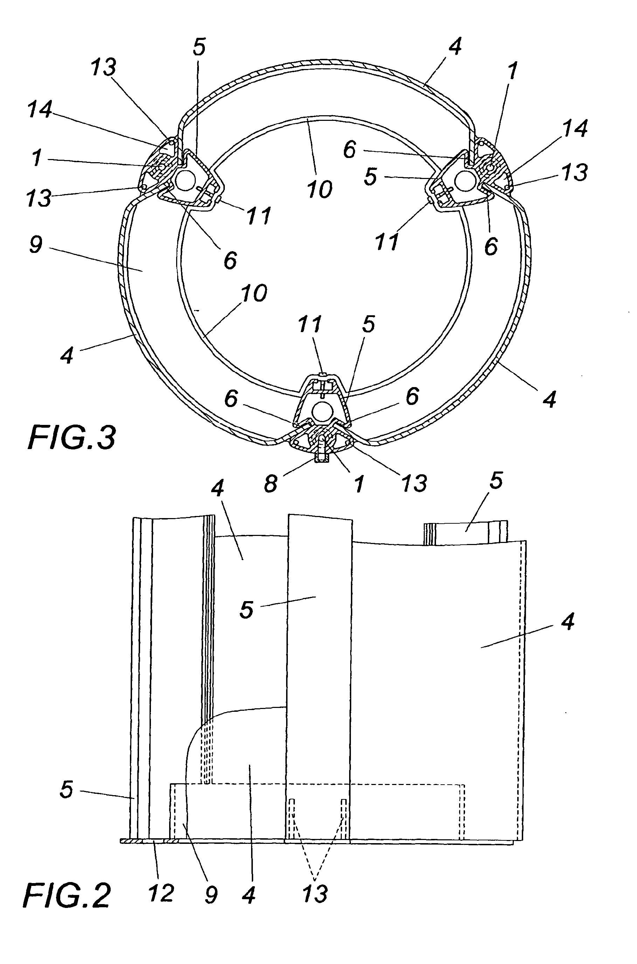

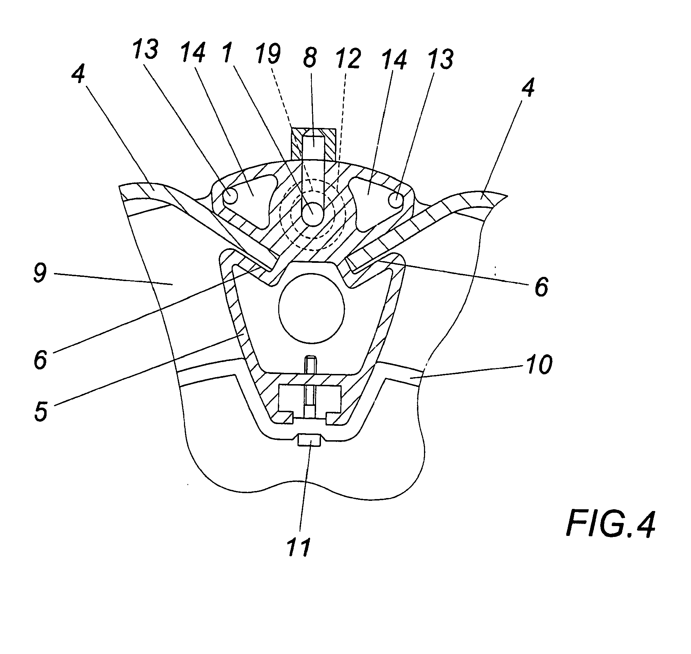

Wie insbesondere Fig. 1 und Fig. 3 entnommen werden kann, besteht die erfindungsgemäße Vorrichtung zum Beaufschlagen der Luft gemäß dem dargestellten Ausführungsbeispiel aus drei Druckleitungen 1, die mit einem Fußteil 2 verbunden sind. Das Fußteil 2 und die Druckleitungen 1 bilden ein Standgerüst 3 aus, in das drei Mantelteile 4 eingesetzt sind. Die Druckleitung 1 wird von einer Profilleiste 5 ausgebildet, die zwei gegenüberliegende, V-förmig zulaufende Nuten 6 aufweist, in die je ein Mantelteil 4 eingeschoben ist, was insbesondere der Fig. 4 entnommen werden kann. Für die Montage der Vorrichtung ist daher lediglich notwendig, nachdem das Standgerüst 3 montiert worden ist, den jeweiligen Mantelteil 4 an dem Standgerüst 3 zu befestigen, was vergleichsweise einfach durchführbar ist. Die Druckleitung 1 ist mit einer am oberen Ende des Standgerüsts 3 vorgesehenen Sprüheinrichtung 7 verbunden. Außerdem können auf der Außenseite der Profilleiste 5 auch Sprüheinrichtungen 8, beispielsweise in der Form von Düsen, vorgesehen werden, um so nicht nur Sprühflüssigkeit oberhalb eines zu beaufschlagenden Umgebungsbereichs auszutragen, sondern auch die Umgebung seitlich des Standgerüsts 3 mit Sprühflüssigkeit zu beaufschlagen. Insbesondere die seitlichen Sprüheinrichtungen 8 sind besonders einfach anzubringen, da ja die Druckleitung 1 von außen zugänglich ist.

Die Enden der gleichlangen Profilleisten 5 werden von einer L-förmigen Schelle 9 verdrehfest gehalten, wobei die Profilleisten 5 mit einer Seitenwand 10 der Schelle 9 über Schrauben 11 verbunden sind. Die Schelle 9 weist Öffnungen 12 zum Durchführen der Druckleitungen 1 und Halteelemente 13 zum Hintergreifen von Hohlräumen 14 der Profilleisten 5 auf. Mit solch einer Schelle 9 ist es auch vergleichsweise einfach möglich, das Fußteil 2 und die Sprüheinrichtung 7 an die Profilleisten 5 bzw. der Schelle 9 zu befestigen. Außerdem kann mit dem Vorsehen einer Schelle 9 als Verbindungselement zwischen den Profilleisten 5 die Höhe der Vorrichtung einfach angepaßt werden. Die drei Profilleisten 5 mit den zwei Schellen 9 bilden nämlich einen Gerüstteil, das einfach aneinander gereiht werden kann, was insbesondere der Fig. 1 entnommen werden kann. Das Ausführungsbeispiel gemäß Fig.1 weist zwei solche Gerüstteile auf, die zueinander über die Schellen 9 fest verschraubt sind. Außerdem weist eine Profilleiste 5 einen Flansch 15 zum Einbringen von Sprühflüssigkeit in die Druckleitung 1 auf.

Eine Druckleitung 1 des Standgerüsts 3 wird verwendet, um ein über einen Flansch 16 zugeführtes Heizmedium, insbesondere Gas, an eine am oberen Ende des Standgerüsts angeordnete Heizeinrichtung 17 weiterzuleiten. Zur Abschirmung der Wärme gegenüber der Sprüheinrichtung 7 ist ein Hitzeschild 18 zwischen beiden Einrichtungen vorgesehen. Die Erfindung ist daher nicht nur geeignet, die Luft zu kühlen bzw. zu befeuchten, sondern auch geeignet, die Luft zu heizen.

Außerdem ist die Druckleitung 1 an Ihren Enden erweitert, beispielsweise über eine tiefenbegrenzte Bohrung 19, um so das Einsetzen eines Nippels zum Verbinden der angesetzten Druckleitungen 1 zu erlauben, oder auch um einen Abschlußteil einsetzten zu können, welches Abschlußteil von der Schelle 9 in der Druckleitung 1 gehalten wird.

## Patentansprüche

1. Vorrichtung zum Beaufschlagen einer Luft mit einer eine Sprühflüssigkeit aufnehmenden Druckleitung (1), die mit einer Sprüheinrichtung (7) verbunden ist, und mit einem auf einem Fußteil (2) lastenden rohrförmigen Gehäusemantel, **dadurch gekennzeichnet, daß** das Fußteil (2) und wenigstens zwei starre Druckleitungen (1) ein Standgerüst (3) ausbilden, mit dem der aus zumindest zwei Mantelteilen (4) bestehende Gehäusemantel auswechselbar verbunden ist.

2. Vorrichtung nach Anspruch 1, **dadurch gekennzeichnet, daß** die starren Druckleitungen (1) von je einer Profilleiste (5) ausgebildet werden und daß die Profilleisten (5) gegenüberliegende, V-förmig zulaufende Nuten (6) aufweisen, in die je ein Mantelteil (4) ragt.

3. Vorrichtung nach Anspruch 2, **dadurch gekennzeichnet, daß** die Enden der gleichlangen Profilleisten (5) an ihren Enden durch eine L-förmige Schelle (9) zueinander verdrehfest gehalten werden, wobei die Profilleisten (5) mit einer Seitenwand (10) der Schelle (9) verschraubt sind und die Schelle (9) Öffnungen (12) zum Durchführen der Druckleitungen (1) und Halteelemente (13) zum Hintergreifen von Hohlräumen (14) der Profilleisten (5) ausbildet.

4. Vorrichtung nach einem der Ansprüche 1 bis 3, **dadurch gekennzeichnet, daß** zumindest eine Druckleitung (1) ein Heizmedium, insbesondere Gas, führt und mit einer am oberen Ende des Standgerüsts (3) angeordneten Heizeinrichtung (17) verbunden ist.

5. Vorrichtung nach einem der Ansprüche 1 bis 4, **dadurch gekennzeichnet, daß** entlang der Druckleitung (1) Sprüheinrichtungen (8) zum Versprühen von Sprühflüssigkeit angeordnet sind.

## Claims

1. Device for humidifying air, having a pressure line (1) which receives a spray liquid and which is connected to a spraying device (7), and having a tubular housing casing which rests on a foot part (2), **characterised in that** the foot part (2) and at least two rigid pressure lines (1) form a stand frame (3) to which the housing casing consisting of at least two casing parts (4) is connected in an interchangeable manner.

2. Device as claimed in claim 1, **characterised in that** the rigid pressure lines (1) are formed by a respective profiled strip (5) and that the profiled strips (5) have oppositely arranged grooves (6) tapering in a V shape, into which a respective casing part (4) protrudes.

3. Device as claimed in claim 2, **characterised in that** the ends of the profiled strips (5) which are of equal length are held together in a non-rotational manner at their ends by an L-shaped bracket (9), wherein the profiled strips (5) are screwed to a side wall (10) of the bracket (9) and the bracket (9) forms openings (12) for passage of the pressure lines (1) and holding elements (13) for engagement with cavities (14) of the profiled strips (5).

4. Device as claimed in any one of claims 1 to 3, **characterised in that** at least one pressure line (1) carries a heating medium, in particular gas, and is connected to a heating device (17) disposed at the upper end of the stand frame (3).

5. Device as claimed in any one of claims 1 to 4, **characterised in that** spraying devices (8) for spraying spray liquid are disposed along the pressure line (1).

## Revendications

1. Dispositif pour mise sous pression d'un air, avec une conduite à pression (1), recevant un liquide à pulvériser, reliée à un dispositif de pulvérisation (7), et avec une enveloppe de boîtier tubulaire reposant sur une partie pied (2), **caractérisé en ce que** la partie pied (2) et au moins deux conduites à pression (1) rigides constituent un bâti (3), auquel l'enveloppe de boîtier, composée d'au moins deux parties d'enveloppe (4), est reliée de manière amovible.

2. Dispositif selon la revendication 1, **caractérisé en ce que** les conduites à pression (1) rigides sont chacune formées par une bande profilée (5), et **en ce que** les bandes profilées (5) présentent des rainures (6) opposées, évoluant en V, dans chacune desquelles pénètre une partie d'enveloppe (4).

3. Dispositif selon la revendication 2, **caractérisé en ce que** les extrémités des bandes profilées (5) de longueur identique, sont maintenues immobilisées, à leurs extrémités, en rotation les unes par rapport aux autres au moyen d'une collerette (9) en forme de L, les bandes profilées (5) étant vissées à une paroi latérale (10) de la collerette (9), et la collerette (9) présentant des ouvertures (12), pour le passage des conduites à pression (1), et des éléments de maintien (13), pour à saisie par l'arrière d'espaces creux (14) des bandes profilées (5).

4. Dispositif selon l'une des revendications 1 à 3, **caractérisé en ce qu'**au moins une conduite à pression (1) sert au guidage d'un fluide de chauffage, en particulier d'un gaz, et est reliée à un dispositif de chauffage (17) disposé à l'extrémité supérieure du bâti (3).

5. Dispositif selon l'une des revendications 1 à 4, **caractérisé en ce que** des dispositifs de pulvérisation (8), pour pulvériser un liquide à pulvériser, sont disposés le long de la conduite à pression (1).
